# EUROPEAN PATENT APPLICATION

(11) **EP 1 840 728 A2**
(43) Date of publication of application: **03.10.2007**
(21) Application number: 07251418.5
(22) Date of filing: 30.03.2007
(51) Int. Cl.: G06F 3/12

(54) **Printer driver with print search function**

(30) Priority: 31.03.2006 US 394851
(71) Applicant: Ricoh Company, Ltd., Tokyo 143-8555 (JP)
(72) Inventor: Hattori, Tomoki c/o Ricoh Corporation, Cupertino, CA 95014-5924 (US); Matsushita, Mitsugu c/o Ricoh Corporation, Cupertino, CA 95014-5924 (US); Wehner, Ulrich c/o Ricoh Corporation, Cupertino, CA 95014-5924 (US)
(74) Representative: Mounteney, Simon James

(57) **Abstract**

Improved techniques which enable a user of an information terminal to select a printer for printing a print job are provided. Such techniques may be embodied in a printer driver installed on the information terminal, or a printing application provided through a network to the information terminal. The information terminal configured by the printer driver or printing application includes a printer information obtaining part and a user interface. The printer information obtaining part searches for printers on a network, and communicates with the printers on the network to obtain printer properties information from the printers. The user interface presents in a single view the printer properties information obtained from the printers, for selection by the user. A printing system and a method for printing over a network having similar features are also provided.

## Description

### TECHNICAL FIELD

This application relates to printer drivers. In particular, the application relates to improved printer driver software which enable the user to access any of various printing devices on a network.

### DESCRIPTION OF RELATED ART

In the current information age, there are often discussions of the desirableness of a paperless society. However, notwithstanding such discussions, there remains a great need by users of computers and information terminals for printing functionality. Therefore, devices having printing functionality, such as printers, copiers, multi-function devices, etc., continue to play a significant role in information technology (IT) at home and at work.

A computer or information terminal typically needs printer driver software in order to communicate properly with a printing device. A printer driver generally provides a software interface that allows the operating system and software applications running on the computer or information terminal to interface functionally with the printing device. For example, the printer driver software may match standardized commands from the computer's operating system to specific capabilities of the printing device.

Printer driver software is typically stored on a floppy diskette or other portable storage medium packaged with a peripheral device, for installation on a computer or information terminal which will be communicating with the peripheral device. Different printer drivers may be provided for different computer configurations (for example, different operating system versions may require different drivers). Additionally, for many printing devices different drivers are required to support different feature sets. Printers may have, for instance, one driver that supports a set of languages, and a different driver may be required for support of other languages. Likewise, if the user wishes to utilize a special math character set, a particular driver may be required.

The set of printing devices and functionalities available to a user can change over time because printing devices can be replaced or updated. In addition, the current trend is that more and more of the computers and other information terminals which can access the peripherals are mobile. Therefore, the number and functionality of printing devices available to a user can vary depending on the location of the computer or information terminal used by the user at that moment. For example, when the computer or information terminal is connected to a network, the user may access any of various printing devices connected to the network, assuming the user has access rights to the device.

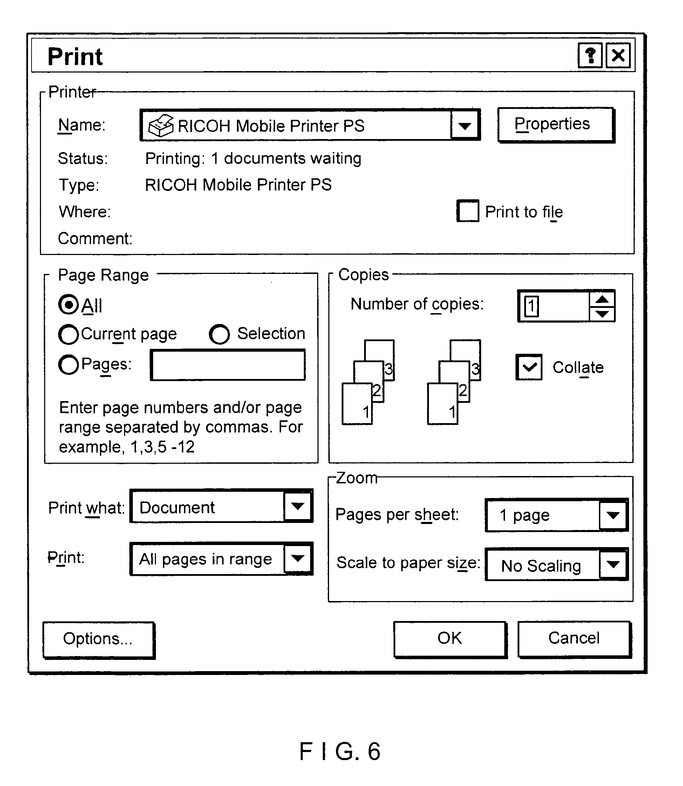

However, conventional IT systems often do not provide a user friendly system for the user to find the appropriate or desired printer. For example (Fig. 6), when a user invokes a print function, the user interface of the conventional system displays a list of printer names without printer properties information. While some printer properties information may be displayed when the user selects one of the printer names from the list, the displayed properties are only for the single, selected printer. The user cannot easily compare printer properties of the selected printer to printer properties of other available printers.

### SUMMARY

This disclosure provides improved techniques which enable a user of an information terminal to select a printer for printing a print job. Such techniques may be embodied in computer software (for example, printer driver or printing application). The information terminal configured by such software includes a printer information obtaining part and a user interface. The printer information obtaining part searches for printers on a network, and communicates with the printers on the network to obtain printer properties information from the printers. The user interface presents in a single view the printer properties information obtained from the printers, for selection by the user.

A printing system and a method for printing over a network having similar features are also provided.

### BRIEF DESCRIPTION OF THE DRAWINGS

The features of the present application can be more readily understood from the following detailed description with reference to the accompanying drawings wherein:
Fig. 1 shows a schematic diagram of a printing system which can be configured according to the present disclosure;
Fig. 2 shows a block diagram of an informational terminal;
Figs. 3A through 3C show block diagrams of software-configured apparatuses which can be implemented on an information terminal, according to some examples of the present disclosure;
Figs. 4A through 4E show user interface windows, according to examples of the present disclosure;
Fig. 5 shows a flow chart of a work flow for printing over a network, according to an example of the present application; and
Fig. 6 shows a conventional user interface window for selecting a printer to print a print job.

### DETAILED DESCRIPTION

In describing preferred or exemplary embodiments illustrated in the drawings, specific terminology is employed for the sake of clarity. However, the disclosure of this patent specification is not intended to be limited to the specific terminology so selected and it is to be understood that each specific element includes all technical equivalents that operate in a similar manner.

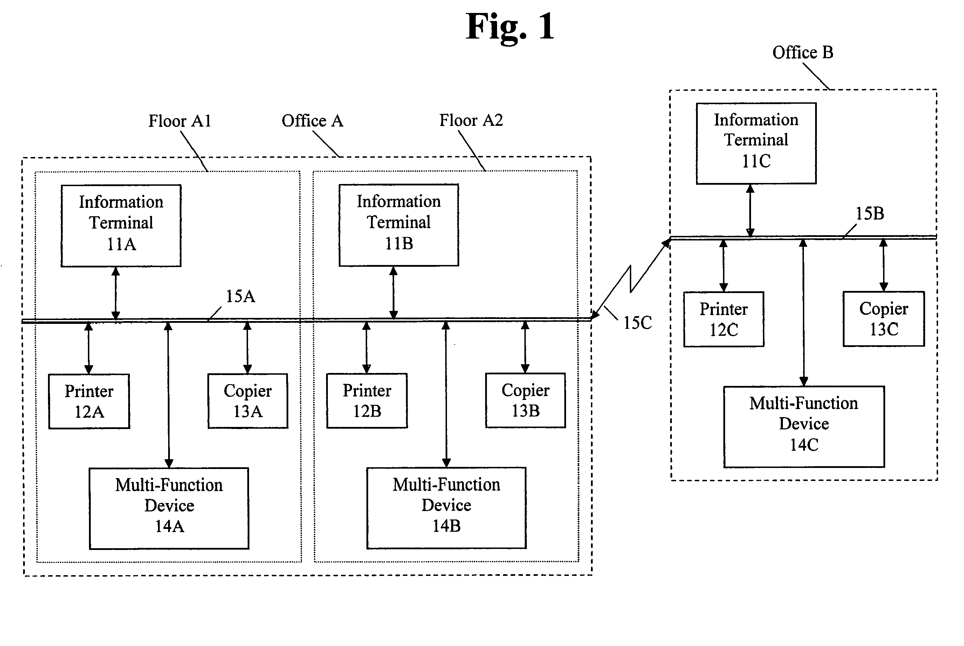

Fig. 1 shows an example of a printing system in which information terminals are interconnected with printing devices through a network connection. The example of Fig. 1 corresponds to an exemplary IT environment of an enterprise (for example, a corporation or other commercial enterprise, or another organization, such as a governmental agency, other public or private organizations, etc.).

The enterprise of Fig. 1 includes multiple offices, including office A and office B. IT components in offices A and B are interconnected by subnetworks 15A and 15B. Subnetwork 15A is connected with subnetwork 15B through subnetwork 15C. Each of subnetworks 15A through 15C can include one or a combination of wired or wireless networks. The subnetwork 15A through 15C (as well as possibly other subnets) jointly constitute an enterprise network (not identified in Fig. 1).

Office A includes multiple floors, including floor A1 and floor A2 (and can include many additional floors). On floor A1, information terminal 11A, printer 12A, copier 13A and multi-function device 14A are interconnected through network 15A. Similarly, information terminal 11B, printer 12B, copier 13B and multi-function device 14B, on floor A2, are interconnected through network 15A. Information terminal 11A can access the printing devices on floor A2 (for example, printer 12B, copier 13B, multi-function device 14B, etc.), as well as the printing devices on floor A1 (for example, printer 12A, copier 13A, multi-function device 14A, etc.).

Similarly, information terminal 11B can access the printing devices on floor A1 (for example, printer 12A, copier 13A, multi-function device 14A, etc.), as well as the printing devices on floor A2 (for example, printer 12B, copier 13B, multi-function device 14B, etc.).

In office B, information terminal 11C, printer 12C, copier 13C and multi-function device 14C are interconnected through network 15C. It should be appreciated that while information terminal 11C, printer 12C, copier 13C and multi-function device 14C are shown in Fig. 1, Office B may include many more terminals and printing devices. Similarly, office A can include many more terminals and printing devices, other than those shown in Fig. 1. Indeed, the printing system of this disclosure is preferably configured to be scalable such that terminals can be added to the system as desired and needed and print jobs thereof can be serviced.

The term "printer" used herein, including in the appended claims, is used generically to include any output device having a printing or plotting functionality, and includes multi-function devices having a copy and/or scanning function in addition to the printing or plotting function.

The term "information terminal" used herein includes any of the various conventional devices which have a need to print on demand, such as personal computers, laptop or notebook computers, workstations, other types of computers, PDAs, other information appliances, etc.

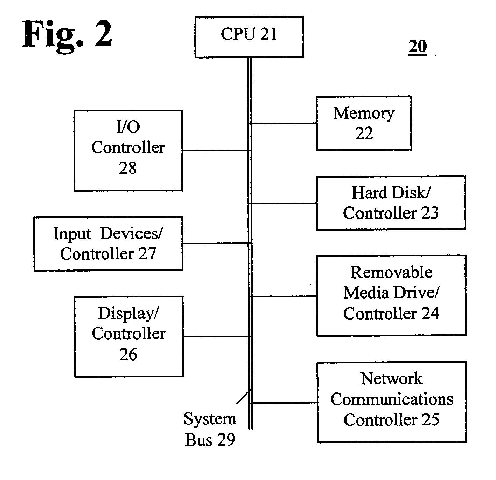

An exemplary configuration of an information terminal is shown in Fig. 2. Information terminal 20 includes CPU 21, memory 22, hard disk (and controller) 23, network communications controller 25 (for communications through a wired or wireless network), display (and controller) 26, one or more input devices (and controller) 27, I/O controller and optional removable media drive (and controller) 24, all of which are connected through system bus 29.

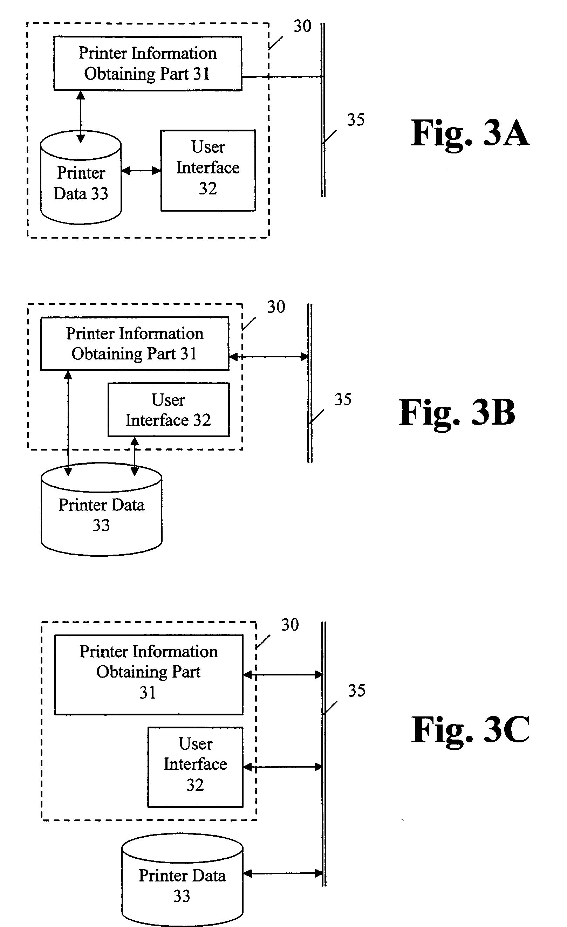

Each information terminal connected to the enterprise network can preferably be configured with software to allow the user of the terminal to view printer properties information for a list of printers connected to the enterprise network. For example (Figs. 3A through 3C), an information terminal can be configured through software to include apparatus 30 which comprises a printer information obtaining part 31 and a user interface 32. Such software can be, for example, a printer driver or printing application downloaded to the information terminal through a network connection or via removable media (for example, floppy diskette, optical disc, other media, etc.).

The printer information obtaining part 32 searches for printers on a network, and communicates with the printers on the network to obtain printer properties information from the printers. For example, many printers store printer data, such as its attributes or printer properties information, in a Management Information Base (MIB) . The MIB may conform with the SNMP (Simple Network Management Protocol) protocol, and printer properties information can be obtained from the MIB through SNMP queries. As another example, the printers on the network can be discovered by broadcast of SNMP messages over the network and then waiting for particular responses from printer devices.

The printer information obtained by the printer information obtaining part 32 can be stored along with other printer data 33 in the information terminal (Fig. 3A). Alternatively, the printer data can be stored external to the information terminal and retrieved (for example through the network) as needed (Figs. 3B and 3C).

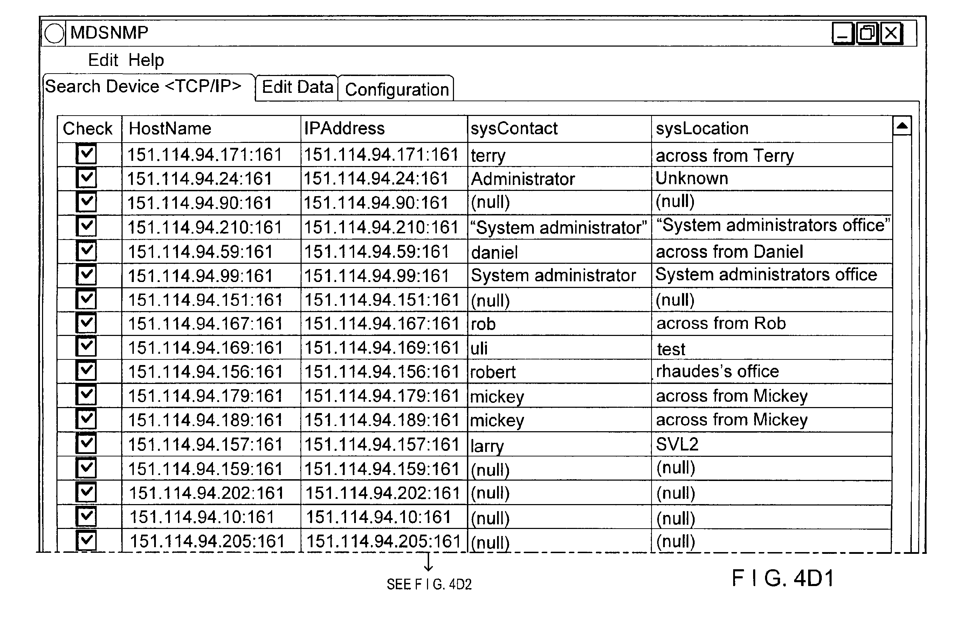

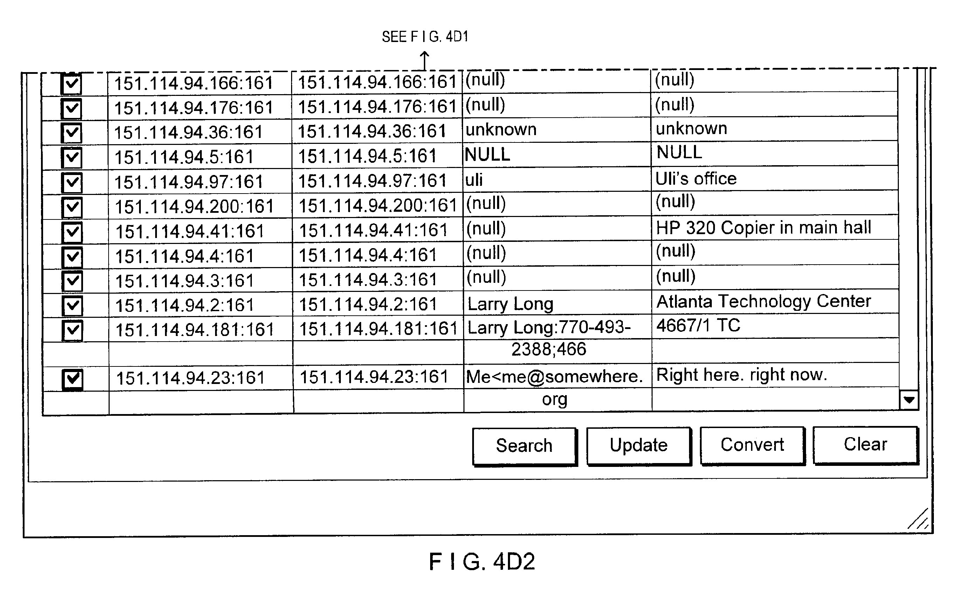

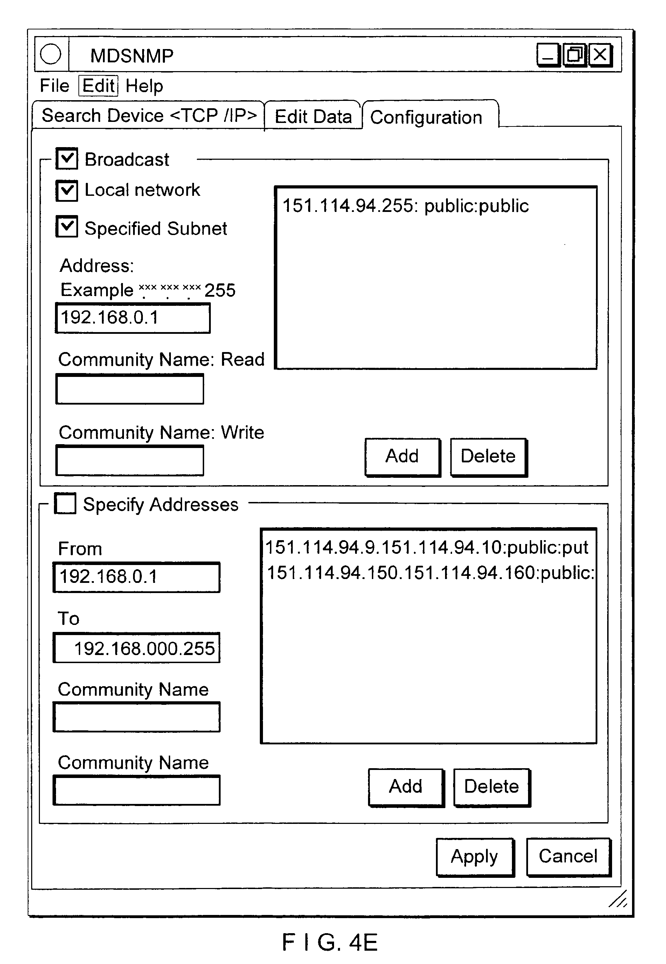

Preferably, a user interface window is provided to edit the stored printer data. Fig. 4D shows an example of a scrollable window in which the printer data is presented as a table of entries. The user can edit the information in Fig. 4D, including activate or deactivate (by checking or unchecking) an entry. When a search is to be performed, the entries in the stored printer data can be consulted before the search is performed. In addition, the user can manually enter an entry. The search can update an entry or populate an entry with additional information.

The user interface 32 presents in a single view, for selection by the user, printer data, including the printer properties information obtained from the printers. The printer data presented by the user interface can include any of the printer properties information that would be useful to a user for deciding the printer to select for a print job.

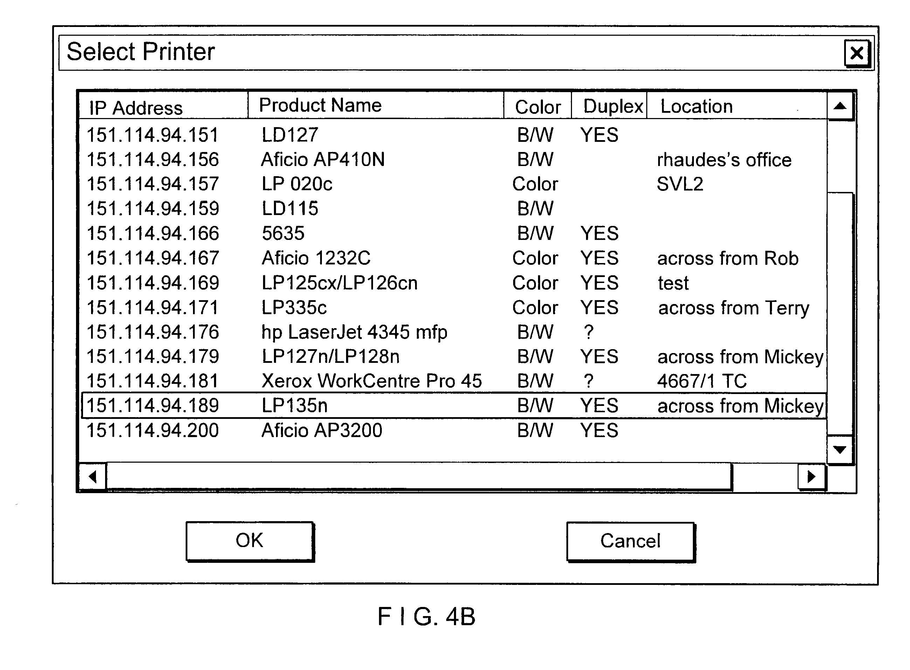

Some exemplary printer properties information which can be presented by the user interface, include, for example (Fig. 4B), printer product name, color printing, duplex printing, printer location (for example, country, city, building, floor, office name), etc. Additional printer properties information can be presented, such as printing speed (for example, 16 pages per minute), paper sizes (for example, Letter/Legal/11x17), asset number (for example, used by some enterprises to identify the IT asset), etc. The term "printer properties information" used herein, including in the appended claims, refers to any of the above-mentioned printer properties information as well as other printer properties information that does not constitute a printer name of a specific printer.

The user interface may further include a configuration view for configuration of the information to be displayed.

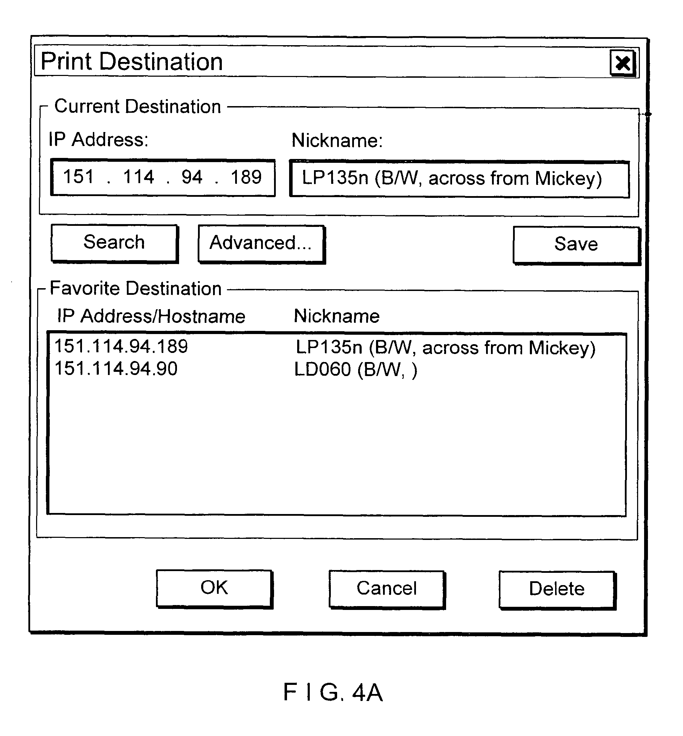

The user interface 32 can include a window or panel for the user to request a search for printers on the network (for example, search button in Fig. 4A). Such a user interface window may allow the user to specify a desired printer property (for example, printer location) and request search for a printer having the specified printer property.

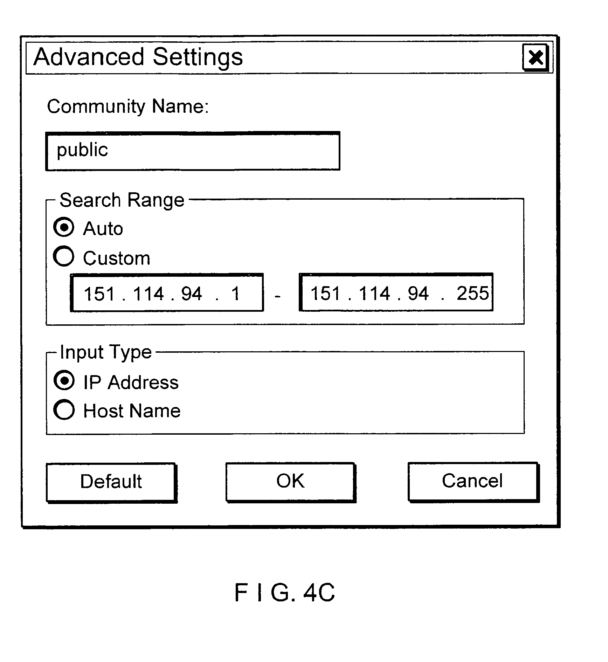

The user interface may allow the user to limit the search to a particular search range on the network (see, for example, Fig. 4C). For example, the user interface may allow the user specify manually a range of network addresses (for example, IP addresses), such as 151.114.94.1 - 151.114.94.255. The manually specified range can also be saved and used as the default for the next search. In another example, the search range may be configured automatically, such as to the local subnet. The user interface preferably allows the user to select manual configuration, auto configuration or default configuration (for example, Default button in Fig. 4C) of the search range. For example, the user may normally (that is, when he/she is in his/her home office) use default configuration, but select auto configuration when he/she visits another office. Fig. 4C shows an exemplary user interface window which presents an advanced settings view for selecting auto configuration of the search range or manually specifying the search range.

In addition, the search may further be limited by community name. The user can specify community name to access printers that have limited access (for example, access to some color printers or high-throughput printers may be limited to those who know the password for the printer). Fig. 4C shows an exemplary user interface window which presents an advanced settings view wherein a community name can be specified for the search.

Thus, the user interface can include one or more configuration view for specifying parameters of the search, and the specified parameters can be stored as a configuration. Preferably, multiple configurations can be stored, and one of the configurations can be selected before a new search is performed. For example, one configuration may be search by location only, auto-configuration of range, and default SNMP settings. Another configuration may be search by location and for color printing, manual specification of range, and special SNMP settings. The selection of configuration may be manual or automatic (for example, according to location or network information, or according to the user information).

An information terminal might track its own location (for example, using a Global Positioning System card) and provide such location information. Alternatively, location information may be extrapolated from locations of routers, locations provided by wireless networks or other wireless technologies (such as RFID). The terminal location information may be used to configure the search or select a stored configuration.

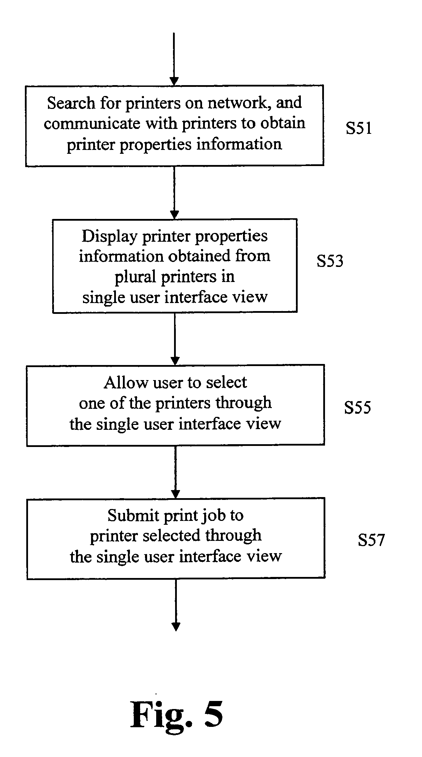

A method for printing over a network, according to an example of this disclosure (Fig. 5), is discussed below.

The method includes searching for printers on the network, and communicating with a plurality of the printers to obtain printer properties information from the printers (step S51). After printer properties information is collected, the printer properties information for the plurality of printers is displayed in a single view of a user interface (step S53), unlike the conventional printer selection user interface wherein the user selects the printer without the benefit of viewing and comparing printer properties information for a plurality of printers together. The user is allowed through the single view of the user interface to select one of the printers (step S55), and then a print job can be submitted to the printer selected through the single view of the user interface (step S57). Such a method allows the user to have a comprehensive view of choices of printers that he/she can use.

Additional user interface features may be provided to enhance the utility of the method. The method preferably further includes providing a search view for the user to specify a desired printer property, and searching for a printer having the specified printer property. In addition, the method may further include one or more of the following features: providing a configuration view through the user interface for specifying parameters of the search for printers on said network, and storing the specified parameters as a configuration; displaying a configuration view through the user interface to allow configuration of the single view; storing a plurality of configurations, and specifying parameters for a new search by selecting one of the plurality of configurations; and specifying parameters for a new search by automatically selecting one of said plurality of configurations based on location information; limiting the search for printers on said network to a specified search range on said network; and providing an advanced settings view through the user interface for specifying a community name for the search for printers on said network.

The above specific embodiments are illustrative, and many variations can be introduced on these embodiments without departing from the scope of the appended claims. For example, elements and/or features of different illustrative embodiments may be combined with each other and/or substituted for each other within the scope of this disclosure and appended claims.

## Claims

1. A printer driver comprising:
a printer information obtaining part configured to search for printers on a network, and communicate with a plurality of said printers on said network to obtain printer properties information from said plurality of said printers; and
a user interface configured to present in a single view said printer properties information obtained from said plurality of said printers, for selection by a user of one of said plurality of said printers from said single view.

2. A printer driver according to claim 1, wherein the user interface further includes a configuration view for configuration of the information to be displayed in said single view.

3. A printer driver according to claim 1, further comprising a search tool for the user to specify a printer property and search for a printer having the specified printer property.

4. A printer driver according to claim 1, wherein the search by said printer information obtaining part is limited to a specified search range on said network.

5. A printer driver according to claim 4, wherein the user interface further includes an advanced settings view for one of selecting auto configuration of the search range and manually specifying the search range.

6. A printer driver according to claim 1, wherein the user interface further includes an advanced settings view for specifying a community name for the search performed by said printer information obtaining part.

7. A printer driver according to claim 1, wherein the user interface further includes a configuration view for specifying parameters of said search by said printer information obtaining part.

8. A printer driver according to claim 7, wherein the specified parameters are stored as a configuration.

9. A printer driver according to claim 8, wherein a plurality of configurations are stored and parameters for a new search are specified by selecting one of said plurality of configurations.

10. A printer driver according to claim 8, wherein a plurality of configurations are stored and parameters for a new search are specified by automatically selecting one of said plurality of configurations based on location information.

11. An information terminal configured for user selection of a printer for printing a print job, comprising:
a printer information obtaining part configured to search for printers on a network, and communicate with a plurality of said printers on said network to obtain printer properties information from said plurality of said printers; and
a user interface configured to present in a single view said printer properties information obtained from said plurality of said printers, for selection by a user of one of said plurality of said printers from said single view.

12. A printing application provided through a network to an information terminal enabling a user to select a printer for printing a print job, comprising:
a printer information obtaining part configured to search for printers on a network, and communicate with a plurality of said printers on said network to obtain printer properties information from said plurality of said printers; and
a user interface configured to present in a single view said printer properties information obtained from said plurality of said printers, for selection by a user of one of said plurality of said printers from said single view.

13. A printing system comprising:
a plurality of printers; and
one or more information terminals, each information terminal being configured for user selection of one of the plurality of printers to print a job over a network, and each information terminal comprising:
a printer information obtaining part configured to search for printers on a network, and communicate with a plurality of said printers on said network to obtain printer properties information from said plurality of said printers; and
a user interface configured to present in a single view said printer properties information obtained from said plurality of said printers, for selection by a user of one of said plurality of said printers from said single view.

14. A method for printing over a network, comprising:
searching for printers on said network, and communicating with a plurality of said printers to obtain printer properties information from said plurality of said printers;
displaying in a single view of a user interface said printer properties information obtained from said plurality of said printers;
allowing a user through said single view of said user interface to select one of said plurality of said printers; and
submitting a print job to the one of said plurality of said printers selected through said single view of said user interface.

15. A method according to claim 14, further comprising:
displaying a configuration view through the user interface to allow configuration of said single view.

16. A method according to claim 14, further comprising:
providing a search view for the user to specify a desired printer property; and
searching for a printer having the specified printer property.

17. A method according to claim 14, further comprising limiting the search for printers on said network to a specified search range on said network.

18. A method according to claim 14, further comprising providing an advanced settings view through the user interface for specifying a community name for the search for printers on said network.

19. A method according to claim 14, further comprising:
providing a configuration view through the user interface for specifying parameters of the search for printers on said network; and
storing the specified parameters as a configuration.

20. A method according to claim 19, further comprising:
storing a plurality of configurations; and
specifying parameters for a new search by selecting one of said plurality of configurations.

21. A method according to claim 19, further comprising:
storing a plurality of configurations; and
specifying parameters for a new search by automatically selecting one of said plurality of configurations based on location information.
